# EUROPÄISCHE PATENTANMELDUNG

(11) **EP 0 899 573 A1**
(43) Veröffentlichungstag der Anmeldung: **03.03.1999**
(21) Anmeldenummer: 98112650.1
(22) Anmeldetag: 08.07.1998
(51) Int. Cl.: G01P 13/04, F02D 41/22

(54) **Verfahren und Vorrichtung zur Erkennung der Drehrichtung einer Brennkraftmaschine**

(30) Priorität: 18.08.1997 DE 19735722
(71) Anmelder: Bayerische Motoren Werke Aktiengesellschaft, 80788 München (DE)
(72) Erfinder: Siegl, Norbert, 83661 Lenggries (DE)

(57) **Zusammenfassung**

Bei einem Verfahren zur Erkennung der Drehrichtung einer Brennkraftmaschine mittels eines Kurbelwellenwinkel-Sensors, mittels eines Nockenwellenwinkel-Sensors und mittels eines die Signale dieser beiden Sensoren verarbeitenden elektronischen Brennkraftmaschinensteuergeräts werden einer bestimmten, durch den Nockenwellenwinkel-Sensor erzeugten Signalflanke eine bestimmte erste, durch den Kurbelwellenwinkel-Sensor erfaßbare und bei rückwärtdrehender Brennkraftmaschine vorliegende Kurbelwellenposition sowie derselben Signalflanke eine bestimmte zweite, bei vorwärtsdrehender Brennkraftmaschine vorliegende Kurbelwellenposition zugeordnet. Diese Zuordnungen werden im Brennkraftmaschinensteuergerät abfragbar abgespeichert.

## Beschreibung

Die Erfindung bezieht sich auf ein Verfahren und eine Vorrichtung zur Erkennung der Drehrichtung einer Brennkraftmaschine nach den Oberbegriffen der Patentansprüche 1 und 2.

Ein derartiges Verfahren und eine derartige Vorrichtung ist beispielsweise aus der DE 34 31 232 C2 bekannt. Bei der aus der DE 34 31 232 C2 bekannten Vorrichtung wirkt der Kurbelwellenwinkel-Sensor mit einem an der Kurbelwelle angebrachten Geberrad in Form einer 120 gleich große Zahne aufweisenden Zahnscheibe und der Nockenwellenwinkel-Sensor mit einem an der Nockenwelle angebrachten Geberrad in Form einer sechs verschieden große Zähne aufweisenden Fahnenscheibe zusammen. Mit der aus der DE 34 31 232 C2 bekannten Vorrichtung ist allein durch das Signal des Nockenwellenwinkel-Sensors die Drehrichtung der Brennkraftmaschine erkennbar; denn die Abfolge der ungleich langen Impulse durch die ungleichen Zähne der Fahnenscheibe unterscheidet sich bei der Drehung in die eine Richtung von der Abfolge bei einer Drehung in die andere Richtung.

Ist jedoch das Nockenwellen-Geberrad beispielsweise lediglich mit einem Zahn in Form einer halbkreisförmigen Fahne versehen (sog. Halbsegmentscheibe, Fig. 3), ist durch die Abfolge der Impulse im Signal des Nockenwellenwinkel-Sensors allein die Drehrichtung der Brennkraftmaschine nicht erkennbar. Dreht die Brennkraftmaschine beispielsweise rückwärts (z. B. durch 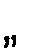 Abwürgen" der Brennkraftmaschine oder durch Rückwärtsrollen im eingelegten Vorwärtsgang) und geht das Brennkraftmaschinensteuergerät von einem Vorwärtsdrehen der Brennkraftmaschine aus, werden insbesondere die Zündung und die Einspritzung falsch ausgegeben. Negative Folgen hierauf können eine Zündung in die Sauganlage, nasse Zündkerzen, unverbrannter Kraftstoff im Katalysator, eine falsche Fehlerdiagnose oder eine fehlerhafte Auslauferkennung sein.

Es ist daher Aufgabe der Erfindung, die Drehrichtung einer Brennkraftmaschine unabhängig von der Ausgestaltung des Nockenwellen-Geberrades zu ermöglichen.

Diese Aufgabe wird durch die kennzeichnenden Merkmale der Patentansprüche 1 und 2 gelöst.

Der Erfindung liegt die Erkenntnis zugrunde, daß sich durch die Spanneinrichtung des Ketten- oder Riementriebes für die Nockenwelle bei rückwärtsdrehender Brennkraftmaschine eine definierte erste Lage des Nockenwellen-Geberrades zum Kurbelwellen-Geberrad ergibt. Dreht die Brennkraftmaschine vorwärts, ergibt sich durch die Spanneinrichtung eine definierte zweite Lage des Nockenwellen-Geberrades zum Kurbelwellen-Geberrad, die sich von der ersten definierten Lage unterscheidet. Die erste Lage wird erfindungsgemäß durch die Zuordnung einer bestimmten Nockenwellenposition zu einer bestimmten ersten, bei rückwartsdrehender Brennkraftmaschine vorliegenden Kurbelwellenposition und die zweite Lage wird durch die Zuordnung derselben Nockenwellenposition zu einer bestimmten zweiten, bei vorwärtsdrehender Brennkraftmaschine vorliegenden Kurbelwellenposition definiert. Das Verfahren zur Erkennung der Drehrichtung der Brennkraftmaschine wird insbesondere mit einem die Signale des Kurbelwellenwinkel-Sensors und des Nockenwellenwinkel-Sensors verarbeitenden elektronischen Brennkraftmaschinensteuergerät durchgeführt.

In der Zeichnung ist ein Ausführungsbeispiel der Erfindung dargestellt. Es zeigt
- Fig. 1: die Zuordnung einer bestimmten Nockenwellenposition zu einer bestimmten ersten Kurbelwellenposition bei rückwärtsdrehender Brennkraftmaschine und die Zuordnung derselben Nockenwellenposition zu einer bestimmten zweiten Kurbelwellenposition bei vorwärtsdrehender Brennkraftmaschine,
- Fig. 2: einen im elektronischen Brennkraftmaschinensteuergerät abzuarbeitenden Funktionsablaufplan zur Durchführung des erfindungsgemäßen Verfahrens und
- Fig. 3: eine mögliche Ausgestaltung eines Nockenwellengeberrades als Halbsegmentscheibe.

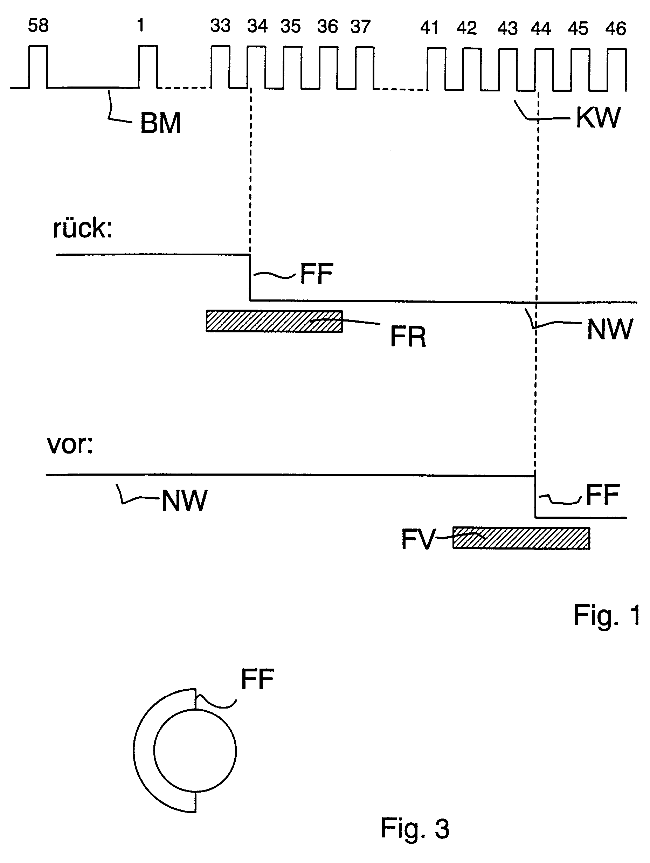

In Fig. 1 oben ist das Signal KW eines Kurbelwellenwinkel-Sensors für eine Umdrehung des Kurbelwellen-Geberrades bei konstant bleibender Drehzahl dargestellt. Das Kurbelwellen-Geberrad weist im vorliegenden Fall 58 Zähne und eine größere Zahnlücke in Form von zwei fehlenden Zähnen als Bezugsmarke BM auf.

In der Mitte der Fig. 1 wird das Signal NW des Nockenwellenwinkel-Sensors beim Rückwärtsdrehen der Brennkraftmaschine dargestellt. Das Rückwärtsdrehen der Brennkraftmaschine wird dadurch erkannt, daß die bestimmte Nockenwellenposition FF, die durch die fallende Flanke im Signal des Nockenwellenwinkel-Sensors durch den Übergang des Zahns in die Zahnlücke am Nockenwellen-Geberrad definiert ist, beim Zahn 34 oder im Zähnebereich 33 bis 36 auftritt, der durch das Fenster FR für die Rückwärtsdreherkennung definiert ist. In Fig. 1 unten ist das Signal NW des Nockenwellenwinkel-Sensors beim Vorwärtsdrehen der Brennkraftmaschine dargestellt. Das Vorwärtsdrehen der Brennkraftmaschine wird daran erkannt, daß die Nockenwellenposition FF beim Zahn 44 oder im Zähnebereich 42 bis 45, der durch das Fenster FV für die Vorwärtsdreherkennung definiert ist, auftritt.

Die unterschiedliche Zuordnung des Nockenwellen-Geberrades zum Kurbelwellen-Geberrad beim Rückwärtsdrehen und beim Vorwärtsdrehen der Brennkraftmaschine wird durch die hier nicht dargestellte Spanneinrichtung des Ketten- oder Riementriebes der Nockenwelle verursacht. Diese unterschiedliche Zuordnung wird zur Erkennung der Drehrichtung der Brennkraftmaschine im Brennkraftmaschinensteuergerät ausgenützt.

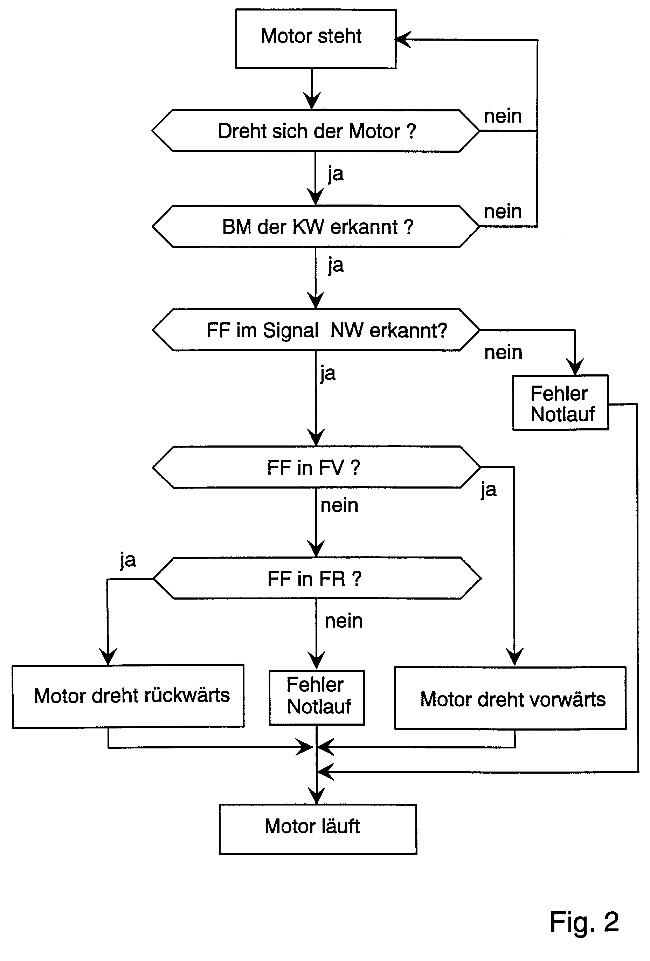

In Fig. 2 sind die Verfahrensschritte dargestellt, die das Brennkraftmaschinensteuergerät zur Drehrichtungserkennung beispielsweise durchführt. Die Drehrichtungserkennung wird insbesondere beim Start der Brennkraftmaschine benötigt. Ausgehend von einer stehenden Brennkraftmaschine (Motor) wird festgestellt, wann sich die Brennkraftmaschine beginnt zu drehen. Ein Drehen der Brennkraftmaschine wird durch das Signal KW des Kurbelwellenwinkel-Sensors erkannt. Um den Kurbelwellenwinkel zu erfassen wird als nächstes die Bezugsmarke BM in Form der Zahnlücke abgewartet, um ausgehend von der Bezugsmarke BM über die Anzahl der Zähne ab der Bezugsmarke BM den Kurbelwellenwinkel bzw. die Kurbelwellenposition zu ermitteln. Wird die fallende Flanke im Signal NW des Nockenwellenwinkel-Sensors erkannt, wird überprüft, ob diese Flanke FF im Fenster FV für die Vorwärtsdreherkennung oder im Fenster FR für die Rückwärtsdreherkennung liegt. In Abhängigkeit von der Lage der Flanke FF wird auf das Rückwärtsdrehen oder das Vorwärtsdrehen der Brennkraftmaschine geschlossen. Wird keine Flanke FF erkannt, wird ein Notlauf der Brennkraftmaschine mittels des Brennkraftmaschinensteuergeräts gestartet, da in diesem Fall auf einen Fehler geschlossen wird.

Mit diesem erfindungsgemäßen Verfahren wird mittels ohnehin vorhandener Komponenten auf einfache und sichere Weise die Drehrichtung der Brennkraftmaschine erkannt, wodurch Fehlzündungen oder Fehleinspritzungen vermieden werden können.

## Patentansprüche

1. Verfahren zur Erkennung der Drehrichtung einer Brennkraftmaschine mittels eines Kurbelwellenwinkel-Sensors, mittels eines Nockenwellenwinkel-Sensors und mittels eines die Signale (KW, NW) dieser beiden Sensoren verarbeitenden elektronischen Brennkraftmaschinensteuergeräts, dadurch gekennzeichnet, daß einer bestimmten, durch den Nockenwellenwinkel-Sensor erfaßbaren Nockenwellenposition (FF) eine bestimmte erste, durch den Kurbelwellenwinkel-Sensor erfaßbare und bei rückwärtdrehender Brennkraftmaschine vorliegende Kurbelwellenposition (33-36) sowie derselben Nockenwellenposition (FF) eine bestimmte zweite, bei vorwärtsdrehender Brennkraftmaschine vorliegende Kurbelwellenposition (42-45) zugeordnet werden und daß diese Zuordnungen im Brennkraftmaschinensteuergerät abfragbar abgespeichert werden.

2. Vorrichtung zur Durchführung des Verfahrens nach Patentanspruch 1 zur Erkennung der Drehrichtung einer Brennkraftmaschine, insbesondere beim Start der Brennkraftmaschine, mit einem Kurbelwellenwinkel-Sensor, der mit einem an der Kurbelwelle angebrachten, eine Vielzahl von Zähnen aufweisenden Geberrad zusammenwirkt, mit einem Nockenwellenwinkel-Sensor, der mit einem an der Nockenwelle angebrachten, mindestens einen Zahn aufweisenden Geberrad zusammenwirkt, und mit einem die Signale (KW, NW) dieser beiden Sensoren verarbeitenden elektronischen Brennkraftmaschinensteuergerät, dadurch gekennzeichnet, daß zumindest einer bestimmten, durch den Zahn des Nockenwellen-Geberrades verursachten Signal-Flanke (FF) des Nockenwellenwinkel-Sensors ein bestimmter erster, durch einen Zahn oder einen Zähnebereich (FV; 42-45) des Kurbelwellen-Geberrades ermittelbarer und bei vorwärtsdrehender Brennkraftmaschine vorliegender Kurbelwellenwinkel oder Kurbelwellenwinkelbereich zugeordnet wird, daß derselben Signal-Flanke (FF) des Nockenwellenwinkel-Sensors ein bestimmter zweiter, durch einen Zahn oder einen Zähnebereich (FR; 33-36) des Kurbelwellen-Geberrades ermittelbarer und bei rückwärtsdrehender Brennkraftmaschine vorliegender Kurbelwellenwinkel oder Kurbelwellenwinkelbereich zugeordnet wird und daß diese Zuordnungen im Brennkraftmaschinensteuergerät abfragbar abgespeichert werden.
